**Europäisches Patentamt**

**European Patent Office**

**Office européen des brevets**

(19)

(11) Veröffentlichungsnummer: **0 031 174**
**B1**

(12) ## EUROPÄISCHE PATENTSCHRIFT

(45) Veröffentlichungstag der Patentschrift:
**22.08.84**

(51) Int. Cl.³: **F 01 D 5/18**

(21) Anmeldenummer: **80201134.6**

(22) Anmeldetag: **01.12.80**

(54) **Gekühlte Gasturbinenschaufel.**

(30) Priorität: **20.12.79 CH 11324/79**

(43) Veröffentlichungstag der Anmeldung:
**01.07.81 Patentblatt 81/26**

(45) Bekanntmachung des Hinweises auf die Patenterteilung:
**22.08.84 Patentblatt 84/34**

(84) Benannte Vertragsstaaten:
**CH DE FR GB IT LI NL SE**

(56) Entgegenhaltungen:
**DE - A - 2 012 947**
**DE - A - 2 012 948**
**DE - A - 2 825 801**
**DE - C - 1 232 478**
**FR - A - 980 028**
**GB - A - 663 639**
**GB - A - 740 597**
**US - A - 2 801 073**
**US - A - 2 888 241**
**US - A - 3 013 641**
**US - A - 3 057 597**
**US - A - 3 446 481**

(73) Patentinhaber: **BBC Aktiengesellschaft Brown, Boveri & Cie., Haselstrasse, CH-5401 Baden (CH)**

(72) Erfinder: **Endres, Wilhelm, Dr. Dipl.-Ing., Waidstrasse 254, CH-5453 Remetschwil (CH)**
Erfinder: **Mukherjee, Dilip, Dr. Dipl.-Ing., Lindenhof 12, CH-5430 Wettingen (CH)**

**Beschreibung**

Die vorliegende Erfindung betrifft eine gekühlte Gasturbinenschaufel gemäss Oberbegriff des Patentanspruches 1.

Bei den heute üblichen Hochtemperatur-Gasturbinen werden die einzelnen Gasturbinenelemente, wie Schaufeln, Wärmestausegmente, Brennkammern und Einlaufkanäle, vorwiegend mit Luft gekühlt. In den einzelnen Komponenten sind Kühlluftkanäle vorgesehen, welche von der Kühlluft durchströmt werden, sowie Schlitze und Öffnungen, durch die die Luft wieder austritt. So wird beispielsweise an den Schaufeln einer Gasturbine ein Teil der Kühlluft an den Abströmkanten ausgeblasen. Die Anordnung der Kühlluftkanäle erfordert relativ grosse Wandstärken, wodurch sich entsprechend hohe Wärmespannungen in diesen Bauteilen ergeben, die sich sowohl in Längs- als auch in Querrichtung derselben auswirken. Diese Wärmespannungen treten im instationären und im stationären Betrieb auf und führen zu hohen thermischen Beanspruchungen bzw. können bis zum Bruch der Schaufel führen.

Bei einer bekannten Schaufel der eingangs genannten Art (US-A-2 888 241) ist zwischen dem Aussenmantel und der Innenwand einer Turbinenschaufel je ein Wellblech in zwei übereinander angeordneten Lagen vorgesehen, und zwar derart, dass die Kühlluft zwischen den Einbuchtungen der Wellblechlagen und der Aussen- bzw. Innenwand hindurchgeführt wird. Ein weiterer, kleinerer Kühlluftanteil strömt zwischen den beiden Wellblechen hindurch. Bei einer derartigen Ausbildung ist mit hohen Wärmespannungen zu rechnen, da in der Schaufellängsrichtung die Dehnung der Innenwand gegenüber der heissen Aussenwand geringer ist und weiterhin ein hoher Druckverlust auftritt.

In der US-A-3 013 641 ist eine durch Innenverrippung verstärkte Wand beschrieben, bei welcher die Innenrippen mit beiden Wandteilen verschweisst sind. Die Innenrippen werden bei dieser Ausbildung aus Blechen mit kegelstumpfartigen Erhöhungen gebildet, wobei das Kühlmittel diese umströmt.

Der im kennzeichnenden Teil des Patentanspruchs 1 definierten Erfindung liegt die Aufgabe zugrunde, eine gekühlte Gasturbinenschaufel der eingangs genannten Art so zu konzipieren, dass sie mit einem relativ niedrigen Druckverlust gekühlt werden kann und dass die im Betrieb auftretenden Wärmespannungen niedriggehalten werden.

Zur Trennung des Kühlmittelraumes vom Druckausgleichsraum sind die Enden des Buckelbleches mit der Deckplatte und der Fussplatte dicht verschweisst.

Durch die Ausbildung der Trennwand zwischen dem Aussenblech und dem Innenblech als Buckelblech ergibt sich eine einfache Möglichkeit, die einzelnen Buckel mit dem Aussenblech zu verbinden, vorzugsweise zu verschweissen, wodurch ein Strömungskanal mit einer hohen, durch die Buckel gebildeten Turbulenz entsteht, so dass selbst bei relativ geringer Strömungsgeschwindigkeit des Kühlmediums hohe Wärmeübergangszahlen erzielbar sind. Ferner ist das Buckelblech nach allen Richtungen sehr elastisch, wodurch entsprechend der Buckelform, Buckeldurchmesser, Buckelrichtung, der Teilung und der Blechstärke eine Reduktion des Elastizitätsmodules bzw. der Längssteifigkeit bis zum zwanzigfachen Wert eines glatten Bleches erzielt werden kann. Anderseits ist das Buckelblech gegen Biegung sehr steif. Durch die Verbindung des Aussenbleches mit dem Buckelblech wird die Steifheit noch erhöht. Beim Auftreten hoher Temperaturen kann bei Dehnung des Aussenbleches das innere Buckelblech infolge dessen hoher Elastizität diesen Dehnungen ohne weiteres folgen, selbst dann, wenn das Buckelblech eine wesentlich niedrigere Temperatur aufweist. Dadurch, dass sich das Buckelblech dehnen kann, treten keine hohen Wärmespannungen auf.

Zwar ist es aus der US-A-2 801 073 bekannt, bei einer Gasturbinenschaufel zwischen den beiden Schaufelwänden, d. h. zwischen der Aussen- und Innenwand, ein mit verschieden grossen Erhöhungen versehenes, einem Buckelblech ähnlich ausgebildetes Blech vorzusehen, wobei die höchsten Punkte des Einsatzbleches mit den Schaufelwänden verschweisst sind. Durch die Anordnung von verschieden grossen Buckeln am Einsatzblech ergibt sich indes eine ungleichmässige Kühlung über der gesamten Schaufelfläche sowie ein hoher Kühlmittelverbrauch, da die Strömungsquerschnitte der Kühlmittelpassagen relativ gross sind und die Kühlmittelpassagen ungleichmässig ausgebildet sind. Auch sind die auftretenden Wärmespannungen nur teilweise kompensierbar, da beide Wände der Schaufel mit dem Einsatzblech verschweisst sind.

Durch die erfindungsgemässe Ausbildung entsteht bei Verwendung von Wasser oder Wasserdampf als Kühlmittel im Strömungskanal zwischen dem Aussenblech und der als Buckelblech ausgebildeten Trennwand ein sehr hoher Druck. Durch das Verschweissen einzelner Buckel der Trennwand mit dem Aussenblech wird ein in sich geschlossener Strömungskanal gebildet. In derartig ausgebildeten Kanälen kann in den Blechen eine Art «Kesselspannung» durch den äusseren Druck des Heissgases, welcher auf die Aussenoberfläche des Aussenbleches einwirkt, entstehen. Um diese «Kesselspannung» zu vermeiden oder wenigstens zu reduzieren, wird zwischen der Trennwand und zum Innenblech hin der Druckausgleichsraum vorgesehen, in welchem der gleiche Druck herrscht wie der äussere Heissgasdruck.

Hierzu wird der Druckausgleichsraum mit einer Druckquelle in Verbindung gebracht, wozu am einfachsten eine geeignete Druckstufe des Verdichters verwendet wird.

In den Zeichnungen ist ein Ausführungsbeispiel der Erfindung vereinfacht dargestellt.

Es zeigen:

Fig. 1 einen Längsschnitt durch eine gekühlte Turbinenschaufel,

Fig. 2 einen Querschnitt der Turbinenschaufel entlang der Schnittlinie A–A in Fig. 1.

Die Turbinenschaufel besteht aus einem Schaufelkern 8, welcher im Beispielsfalle teilweise hohl ausgebildet ist und einen Strömungskanal 9 einschliesst, sowie einer Fussplatte 10, einer Deckplatte 11 und einem im Abstand zum Schaufelkern 8 angeordneten, profilartig ausgebildeten Aussenmantel 1'. Die Fussplatte 10 ist mit einem Deckel 21 verschlossen, die Deckplatte 11 ist mit dem Schaufelkern 8 verschweisst, wobei jedoch zwischen dem Schaufelkern 8 und der Deckplatte 11 eine Dehnungsfuge 12 vorgesehen ist. In der Deckplatte 11 sind weiterhin Kanäle 13 angeordnet, welche mit dem Strömungskanal 9 in Verbindung stehen. In den zwischen dem Aussenmantel 1' und dem Schaufelkern 8 gebildeten Raum ist eine aus einem Buckelblech gebildete Trennwand 4 so angeordnet, dass zum Aussenmantel 1' hin der eigentliche Kühlmittelraum 3 und zum Schaufelkern 8 hin ein Druckausgleichsraum 7 gebildet wird. Hierzu ist die Trennwand 4 an einem Ende mit der Innenoberfläche des Schaufelkernes 8 und am anderen Ende mit der Deckplatte 11 dicht verschweisst. Die einzelnen Buckel 5 der Trennwand 4 sind mit dem Aussenmantel 1' verschweisst bzw. in einer anderen an sich bekannten Weise fest verbunden. Der Druckausgleichsraum 7 steht einmal über die Dehnungsfuge 12 mit einem von einer Auskleidung 14, vorzugsweise einem Wellblech umgrenzten Raum 15 und zum anderen über eine Verbindungsleitung 16 mit einer (nicht dargestellten) Druckquelle in Verbindung. Die Auskleidung 14 überdeckt einen Teil der Innenoberfläche des Strömungskanals 9.

Das durch Pfeile angedeutete Kühlmedium strömt nach Kühlung der Fussplatte 10 in den zwischen dem Aussenmantel 1' und der als Buckelblech bestehenden Trennwand 4 längs der Schaufelachse. Nach Kühlung der Deckplatte 11 strömt das Kühlmedium durch den Strömungskanal 9 im Schaufelkern 8 zurück zum Schaufelfuss. Da der Aussenmantel 1' von den Heissgasen beaufschlagt wird und mit der Trennwand 4 starr verbunden ist, formt die Trennwand 4 eine Art Druckbehälter bzw. kann als Kesselwand betrachtet werden. Ohne Gegenmassnahme würde demnach in den Blechen eine Art Kesselspannung entstehen. Durch den im Druckausgleichsraum 7 herrschenden Druck wird diese Spannung vermieden. Dazu wird beispielsweise von einer (nicht dargestellten) Verdichterstufe der Gasturbine Druckluft über die Verbindungsleitung 16 in den Druckausgleichsraum 7 gefördert. Durch die dichte Verschweissung der beiden Enden der Trennwand 4 mit dem Schaufelkern 8 bzw. der Deckplatte 11 erfolgt eine Abdichtung des Kühlmittelraumes 3 gegenüber dem Druckausgleichsraum 7, wobei jedoch die freie Dehnung des Aussenmantels 1' mit der Trennwand 4 und der Deckplatte 11 nicht beeinträchtigt wird. Da der Schaufelkern 8 nur Dehnungen in Richtung seiner Längsachse ausführt, kann die Auskleidung 14 aus einem Wellblech bestehen.

Eine derartige gekühlte Turbinenschaufel könnte auch einen massiven Schaufelkern 8 aufweisen, wobei dann entsprechende Strömungskanäle für die Rückführung des Kühlmittels vorgesehen werden müssten. In der Regel ist bei einer gekühlten Turbinenschaufel ein Schaufelkern erforderlich, um die aus den aerodynamischen Kräften resultierenden Biegespannungen aufzunehmen. Bei Turbinenschaufeln, die keine grossen mechanischen Spannungen aufnehmen müssen, ist eine ausreichend dimensionierte Innenwand ausreichend. Weiterhin könnte das Kühlmedium auch in umgekehrter Richtung zur hier gezeigten Strömungsrichtung fliessen. Es wäre auch möglich, das Kühlmittel beispielsweise an der Anströmkante vom Fuss zur Deckplatte und an der Abströmkante von der Deckplatte zum Fuss strömen zu lassen. In diesem Falle könnte der Schaufelkern 8 massiv ausgebildet werden.

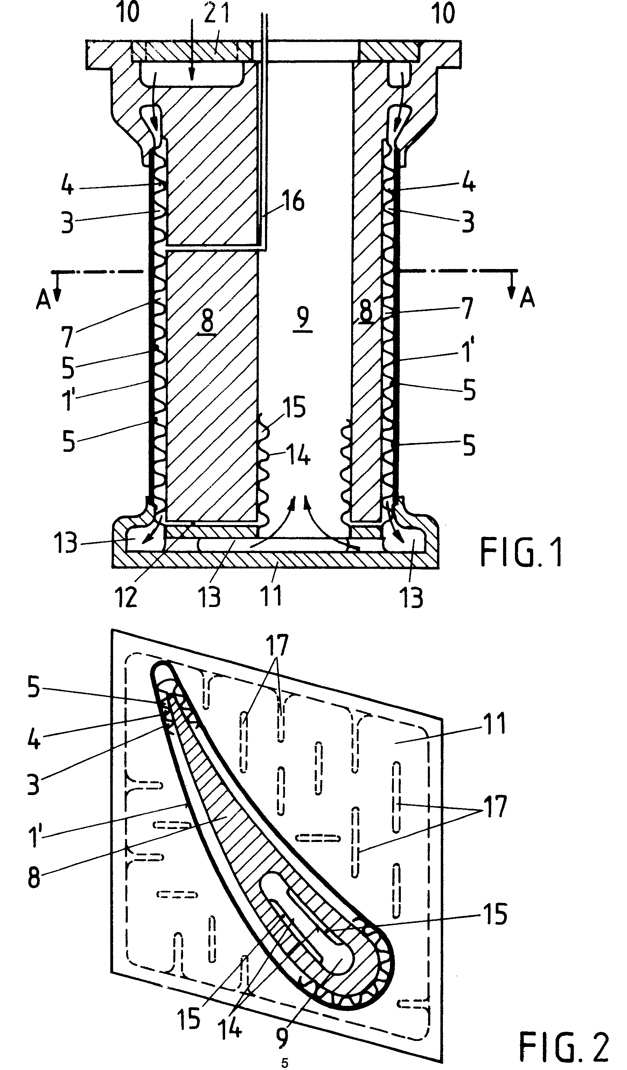

Der in der Fig. 2 dargestellte Querschnitt zeigt andeutungsweise, dass die Deckplatte 11 mit zusätzlichen Kühlrippen 17 versehen sein kann.

**Patentansprüche**

1. Gekühlte Gasturbinenschaufel, im wesentlichen bestehend aus einem Schaufelkern (8) mit einem Strömungskanal (9) sowie mit einer Fussplatte (10), einer Deckplatte (11) und einem, den Schaufelkern (8) profilartig umhüllenden Aussenmantel (1'), wobei zwischen dem Aussenmantel (1') und dem Schaufelkern (8) eine Trennwand (4) so angeordnet ist, dass zum Aussenmantel (1') hin ein Kühlmittelraum (3) und zum Schaufelkern (8) hin ein Druckausgleichsraum (7) gebildet wird, dadurch gekennzeichnet, dass sich die aus einem Buckelblech bestehende Trennwand (4) über die gesamte Länge der Schaufel zwischen dem Aussenmantel (1') und dem Schaufelkern (8) erstreckt, dass die Enden des Buckelbleches (4) mit der Deckplatte (11) und der Fussplatte (10) dicht verschweisst sind und dass im Strömungskanal (9) eine dessen Innenoberfläche teilweise überdeckende Auskleidung (14) angeordnet ist, deren ein Ende mit der Innenoberfläche des Schaufelkernes (8) und deren anderes Ende mit der Deckplatte (11) dicht verschweisst ist.

2. Gasturbinenschaufel nach Anspruch 1, dadurch gekennzeichnet, dass die einzelnen Buckel (5) des Buckelbleches (4) mit dem Aussenmantel (1) verschweisst sind.

3. Gasturbinenschaufel nach Anspruch 1, dadurch gekennzeichnet, dass die Auskleidung (14) ein Wellblech ist.

4. Gasturbinenschaufel nach Anspruch 1, dadurch gekennzeichnet, dass der Druckausgleichsraum (7) einerseits über eine Verbindungsleitung (16) mit einer Druckquelle und anderseits über eine Dehnungsfuge (12) mit einem Raum (15) zwischen dem Schaufelkern (8) und der Auskleidung (14) verbunden ist.

## Claims

1. Cooled gas turbine blade or vane, consisting essentially of a blade or vane core (8) with a flow duct (9), and with a platform (10), a shroud (11) and an outer cover (1′) enclosing the blade or vane core (8) like a profile, a partition (4) being so located between the outer cover (1′) and the blade or vane core (8) that a cooling medium space (3) is formed on the outer cover (1′) side and a pressure balancing space (7) on the blade or vane core (8) side, characterised in that the partition (4), consisting of an embossed sheet, extends between the outer cover (1′) and the blade or vane core (8) over the complete length of the blade or vane, that the ends of the embossed sheet (4) are solidly welded to the shroud (11) and the platform (10) and that a lining (14) is located in the flow duct (9), partially covering the inner surface of the latter, one end of which lining is solidly welded to the inner surface of the blade or vane core (8) and the other end to the shroud (11).

2. Gas turbine blade or vane according to claim 1, characterised in that the individual bosses (5) of the embossed sheet (4) are welded to the outer cover (1).

3. Gas turbine blade according to claim 1, characterised by the fact that the lining (14) is a corrugated sheet.

4. Gas turbine blade according to claim 1, characterised in that the pressure balancing space (7) is connected, on one side, via a connecting pipe (16) to a pressure source and, on the other side, via an expansion joint (12) to a space (15) between the blade or vane core (8) and the lining (14).

## Revendications

1. Aube refroidie pour turbine à gaz, constituée essentiellement d'une âme d'aube (8) avec un canal d'écoulement (9) ainsi que d'une plaque inférieure (10), d'une plaque supérieure (11) et d'une enveloppe extérieure (1′) profilée et entourant l'âme d'aube (8), où une paroi de séparation (4) est disposée entre l'enveloppe extérieure (1′) et l'âme d'aube (8) de façon à constituer avec l'enveloppe extérieure (1′) une cavité pour fluide de refroidissement (3) et, avec l'âme d'aube (8), une cavité de compensation de pression (7), caractérisée en ce que la paroi de séparation (4), constituée d'une tôle emboutie, s'étend sur toute la longueur de l'aube entre l'enveloppe extérieure (1′) et l'âme d'aube (8) et que les extrémités de la tôle emboutie (4) sont assemblées par soudure d'une manière étanche avec la plaque supérieure (11) et la plaque inférieure (10) et qu'un revêtement (14) est disposé dans le canal d'écoulement (9), de manière à recouvrir partiellement sa surface intérieure et dont une extrémité est assemblée par soudure d'une manière étanche avec la surface intérieure de l'âme d'aube (8) et dont l'autre extrémité est soudée d'une manière étanche à la plaque supérieure (11).

2. Aube de turbine à gaz selon la revendication 1, caractérisée en ce que les différentes protubérances (5) de la tôle emboutie (4) sont soudées à l'enveloppe extérieure (1).

3. Aube de turbine à gaz selon la revendication 1, caractérisée en ce que le revêtement (14) est une tôle ondulée.

4. Aube de turbine à gaz selon la revendication 1, caractérisée en ce que la cavité de compensation de pression (7) est en communication, d'une part par une conduite de jonction (16), avec une source de pression et, d'autre part par un joint de dilatation (12), avec une cavité (15) située entre l'âme d'aube (8) et le revêtement (14).

FIG.1

FIG.2